# EUROPEAN PATENT APPLICATION

(11) **EP 4 742 822 A1**
(43) Date of publication of application: **13.05.2026**
(21) Application number: 24853156.8
(22) Date of filing: 29.02.2024
(51) Int. Cl.: H04W 76/28

(54) **COMMUNICATION METHOD, ELECTRONIC DEVICE, AND READABLE STORAGE MEDIUM**

(30) Priority: 17.08.2023 CN 202311044447
(71) Applicant: Honor Device Co., Ltd., Shenzhen, Guangdong 518040 (CN)
(72) Inventor: ZHANG, Mingchen, Shenzhen, Guangdong 518040 (CN); LUO, Fei, Shenzhen, Guangdong 518040 (CN); LI, Haibo, Shenzhen, Guangdong 518040 (CN); ZENG, Wei, Shenzhen, Guangdong 518040 (CN); XUE, Chao, Shenzhen, Guangdong 518040 (CN)
(74) Representative: Goddar, Heinz J.
(86) International application number: PCT/CN2024/079380
(87) International publication number: WO 2025/035740

(57) **Abstract**

This application provides a communication method, an electronic device, and a computer-readable medium. The method includes: User equipment accesses a first network standard via a first network device, where the user equipment and the first network device perform paging based on a first paging cycle; the user equipment receives a first instruction for handover from the first network standard to a second network standard; and the user equipment sends a paging cycle change instruction, where the paging cycle change instruction is used for causing a paging cycle of the user equipment to be the same as a paging cycle of a second network device corresponding to the user equipment after the user equipment accesses the second network standard. This application can avoid a call missing phenomenon caused because the paging cycle of the user equipment and the paging cycle of the second network device of the second network standard are different.

## Description

This application claims priority to Chinese Patent Application No. 202311044447.4, filed with the China National Intellectual Property Administration on August 17, 2023 and entitled "COMMUNICATION METHOD, ELECTRONIC DEVICE, AND READABLE STORAGE MEDIUM", which is incorporated herein by reference in its entirety.

### TECHNICAL FIELD

This application relates to the field of communication technologies, and specifically, to a communication method, an electronic device, and a computer-readable storage medium.

### BACKGROUND

To reduce power consumption, a discontinuous reception (discontinuous reception, DRX) technology is introduced in a communication system. A DRX cycle including a sleep period and an active period is configured for user equipment (user equipment, UE), so that the UE monitors a physical downlink control channel (physical downlink control channel, PDCCH) in the active period to receive downlink data, but does not receive downlink data in the sleep period. Specifically, a network device may set, based on the foregoing DRX technology, a default DRX cycle corresponding to a network standard to which the network device belongs. The UE may report a required specific DRX cycle to a network device of a network standard of the UE based on a service scenario. For example, the UE may report a short customized DRX cycle to the network device based on a low-delay service scenario, to shorten a time interval of receiving service data and reduce a service delay.

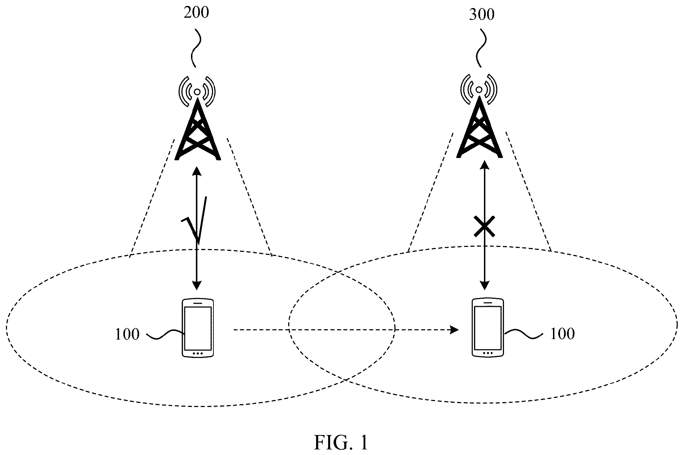

Refer to a schematic diagram of a paging scenario shown in FIG. 1. After UE 100 reports a customized DRX cycle in a current network standard (for example, a 4G network), the UE 100 and a network device of the current network standard may use the customized DRX cycle as a paging cycle. For example, a base station 200 of the current network standard sends a paging message based on the customized DRX cycle, and the UE 100 receives a paging message based on the customized DRX cycle. However, after the UE 100 is migrated to a target network standard (for example, a 5G network), because a DRX cycle at which a network device (for example, a base station 300) of the target network standard sends a paging message does not match a DRX cycle at which the UE 100 receives a paging message, paging fails and consequently, a call missing phenomenon may occur.

### SUMMARY

This application provides a communication method, an electronic device, and a computer-readable medium. This can avoid a call missing phenomenon caused because a DRX cycle of user equipment does not match a DRX cycle of a target network standard, to improve a call experience of a user.

According to a first aspect, this application provides a communication method, including: User equipment assesses a first network standard via a first network device, where the user equipment and the first network device perform paging based on a first paging cycle; the user equipment receives a first instruction for handover from the first network standard to a second network standard; and the user equipment sends a paging cycle change instruction, where the paging cycle change instruction is used for causing a paging cycle of the user equipment to be the same as a paging cycle of a second network device corresponding to the user equipment after the user equipment accesses the second network standard.

The first paging cycle may be a customized DRX cycle shorter than a default DRX cycle of the first network standard, the first network standard may be a current network standard of the user equipment, and the second network standard may be a target network standard of the user equipment. The user equipment may report a required customized DRX cycle to the first network standard based on a requirement of a low-delay service, and further, the user equipment may use a shorter customized DRX cycle as a paging cycle for paging with the first network device in the first network standard.

It may be understood that the customized DRX cycle reported by the user equipment to the first network standard takes effect only in the first network standard, in other words, only in the first network standard, the user equipment uses the customized DRX cycle as a paging cycle for receiving a paging message. If the user equipment accesses another network standard and does not report the customized DRX cycle in the another network standard, the user equipment is to use a default DRX cycle of the another network standard as a paging cycle for receiving a paging message. However, for the first network standard with a function of synchronizing a DRX cycle, when determining that the user equipment is to be handed over to the another network standard, the first network standard may synchronize the customized DRX cycle reported by the user equipment in the first network standard to the another network standard, to cause the another network standard to use the customized DRX cycle as a paging cycle for sending a paging message.

Based on the foregoing situation, when the user equipment is handed over from the first network standard to the another network standard, the paging cycle at which the user equipment receives a paging message and the paging cycle at the another network standard receives a paging message may be inconsistent, As a result, the paging fails, and further, a call missing phenomenon may occur.

Therefore, after the user equipment receives the first instruction for the handover from the first network standard to the second network standard, to avoid the call missing problem caused because the paging cycles are inconsistent, the user equipment may send the paging cycle change instruction, to change the DRX cycle of the user equipment and the DRX cycle of the second network standard into a same cycle based on the paging cycle change instruction. In this way, the call missing problem caused because the paging cycles are inconsistent is avoided.

In a possible implementation of the foregoing first aspect, the first network device includes a first base station, and the user equipment is capable of connecting to a corresponding first core network via the first base station. The second network device includes a second base station, and the user equipment is capable of connecting to a corresponding second core network via the second base station. The first core network is capable of synchronizing the first paging cycle to the second core network when receiving the first paging cycle reported by the user equipment.

The user equipment may report the customized DRX cycle to the first core network. Further, when the first core network determines that the user equipment is to be handed over to the second network standard, the first core network may send the customized DRX cycle to the second core network of the second network standard, so that the second core network may use the customized DRX cycle as a paging cycle for sending a paging message to the user equipment.

In a possible implementation of the foregoing first aspect, that the user equipment sends a paging cycle change instruction includes: The user equipment receives the first instruction sent by the first network device, where the user equipment is not handed over to the second network standard; and the user equipment sends a first cancel instruction to the first core network, where the first cancel instruction is used for canceling the first paging cycle synchronized by the first core network to the second core network, to cause the paging cycle of the user equipment to be the same as the paging cycle of the second network device.

Before being handed over to the second network standard based on the first instruction, the user equipment may send the first cancel instruction to the first core network, to cancel the customized DRX cycle reported by the user equipment in the first network standard. Because the customized DRX cycle has been canceled, that the first core network synchronizes the customized DRX cycle to the second core network may be avoided. If the first core network does not synchronize the customized DRX cycle to the second core network, the second core network is to use a default DRX cycle of the second network standard as a paging cycle for sending a paging message to the second base station. Further, the second base station also uses the default DRX cycle of the second network standard as the paging cycle for sending a paging message to the user equipment. In this case, because the user equipment does not report the customized DRX cycle in the second network standard to the second core network, the user equipment is to use the default DRX cycle of the second network standard as the paging cycle for receiving a paging message. In this manner, the paging cycle of the user equipment and the paging cycle of the second base station are the same. This avoids the call missing phenomenon caused because the DRX cycles are inconsistent.

In a possible implementation of the foregoing first aspect, the first network standard is a 4G network, and the sending a first cancel instruction to the first core network includes: sending a tracking area update request to a 4G core network, where the tracking area update request includes the first cancel instruction.

The current network standard of the user equipment may be a 4G network. In this case, before accessing the target network standard, the user equipment may send the tracking area update request to the 4G network, and use the first cancel instruction as a parameter or a field in the tracking area update request. The first cancel instruction may be the following signaling that is sent by the user equipment to the 4G core network and that is used for canceling the customized DRX cycle reported by the user equipment in the 4G network. Specifically, the user equipment may define a parameter relevant to the customized DRX cycle in the tracking area update request, for example, may customize a parameter indicating whether the user equipment updates the customized DRX cycle and/or a parameter indicating a value of an updated customized DRX cycle of the user equipment, and the signaling for the customized DRX cycle reported by the user equipment in the 4G network is canceled based on the foregoing parameter.

Based on this, the customized DRX cycle reported by the user equipment in the 4G network may be canceled in a manner of sending the tracking area update request to the 4G network. Further, that the 4G core network synchronizes the customized DRX cycle to the target network standard of the user equipment may be avoided. The target network standard of the user equipment may be a 5G network, a 5.5G network, a 6G network, or the like. The target network standard of the user equipment is not limitatively described herein.

In a possible implementation of the foregoing first aspect, that the user equipment sends a paging cycle change instruction includes: The user equipment receives the first instruction sent by the first network device; and the user equipment sends a second cancel instruction to the second core network during the handover to the second network standard, where the second cancel instruction is used for canceling the first paging cycle synchronized by the first core network to the second core network, to cause the paging cycle of the user equipment to be the same as the paging cycle of the second network device.

The user equipment may be handed over to the second network standard based on the first instruction sent by the first network standard, and may send the second cancel instruction for canceling the customized DRX cycle to the second core network during the handover to the second network standard. For example, the user equipment may send a handover request message to the second core network, for the handover to the second network standard. Therefore, the user equipment may set the second cancel instruction in the handover request message, to cancel, during the handover to the second network standard, the customized DRX cycle synchronized by the first core network to the second core network. Because the customized DRX cycle received by the second core network is canceled, that the second core network uses the customized DRX cycle as the paging cycle for sending a paging message to the second base station may be avoided, and that the second base station uses the customized DRX cycle as the paging cycle for sending a paging message to the user equipment is avoided. In this manner, the user equipment and the second base station each use the default DRX cycle of the second network standard as the paging cycle. This avoids the call missing phenomenon caused because the paging cycles are inconsistent.

In a possible implementation of the foregoing first aspect, the second network standard is a 5G network or a 5.5G network, and the sending a second cancel instruction to the second core network includes: sending a first registration request to a 5G core network or a 5.5G core network, where the first registration request includes the second cancel instruction used for canceling the first paging cycle.

The target network standard of the user equipment may be a 5G network or a 5.5G network. The current network standard of the user equipment may be a 4G network, a 6G network, or the like. The current network standard of the user equipment is not limitatively described herein. The user equipment needs to send the first registration request to the 5G core network or the 5.5G core network, for handover to the 5G network or the 5.5G network. Therefore, the first registration request may include the following registration request sent by the user equipment to the 5G core network or the 5.5G core network for 5G or 5.5G network registration. In this way, the user equipment may set a second paging cycle cancel instruction in the registration request, to cancel a customized DRX cycle received by the 5G core network or the 5.5G core network during the 5G or 5.5G network registration, namely, the handover to the 5G network or the 5.5G network, so that both the user equipment and a 5G base station or a 5.5G base station use a default DRX cycle of the 5G network or the 5.5G network as paging cycles for sending and receiving a paging message. In this manner, the call missing phenomenon caused because the paging cycles are inconsistent is avoided.

In a possible implementation of the foregoing first aspect, that the user equipment sends a paging cycle change instruction includes: The user equipment receives the first instruction sent by the first network device; and the user equipment sends a paging cycle report instruction to the second core network during the handover to the second network standard, where the paging cycle report instruction is used for reporting the first paging cycle to the second core network.

The user equipment may be handed over to the second network standard based on the first instruction sent by the first network standard, and may send, to the second core network during the handover to the second network standard, the paging cycle report instruction for reporting the customized DRX cycle. For example, the user equipment may send a handover request message to the second core network, for the handover to the second network standard. Therefore, the user equipment may set the paging cycle report instruction in the handover request message, to report, to the second core network during the handover to the second network standard, the customized DRX cycle synchronized by the first core network to the second core network. Because the user equipment reports the customized DRX cycle received by the second core network, the user equipment may use the customized DRX cycle as the paging cycle for receiving a paging message. Because the second core network receives the customized DRX cycle sent by the second core network, the second core network may send the customized DRX cycle to the second base station. When the second base station determines that the customized DRX cycle is shorter than the default DRX cycle of the second network standard, the second base station may use the customized DRX cycle as the paging cycle for sending a paging message to the user equipment. Further, the user equipment and the second base station each use the customized DRX cycle as the paging cycle. This avoids the call missing phenomenon caused because the paging cycles are inconsistent.

In a possible implementation of the foregoing first aspect, the second network standard is a 5G network or a 5.5G network, and the sending a paging cycle report instruction to the second core network includes: sending a second registration request to a 5G core network or a 5.5G core network, where the second registration request includes the paging cycle report instruction used for reporting the first paging cycle.

The target network standard of the user equipment may be a 5G network or a 5.5G network. The current network standard of the user equipment may be a 4G network, a 6G network, or the like. The current network standard of the user equipment is not limitatively described herein. The user equipment needs to send the second registration request to the 5G core network or the 5.5G core network, for handover to the 5G network or the 5.5G network. Therefore, the second registration request may include the following registration request sent by the user equipment to the 5G core network or the 5.5G core network for 5G or 5.5G network registration. In this way, the user equipment may set, in the registration request, the instruction for reporting the customized DRX cycle, to report the customized DRX cycle received by the 5G core network or the 5.5G core network to the 5G core network or the 5.5G core network during the 5G or 5.5G network registration, namely, the handover to the 5G network or the 5.5G network, so that both the user equipment and the 5G base station or the 5.5G base station use the customized DRX cycle as paging cycles for sending and receiving a paging message. In this manner, the call missing phenomenon caused because the paging cycles are inconsistent is avoided.

In a possible implementation of the foregoing first aspect, the first instruction includes a handover and reconfiguration instruction or a redirection instruction, where the handover and reconfiguration instruction indicates the user equipment in a connected state to be handed over to the second network standard, and the redirection instruction indicates the user equipment in a connected state to be redirected to the second network standard after an RRC connection is released.

A redirection message includes a radio resource control release message carrying a redirection indication, and the radio resource control release message is used for causing the user equipment in a connected state to be redirected to the target network standard after a radio resource control connection is released. A handover and reconfiguration message includes a radio resource control reconfiguration message carrying a handover indication, and the radio resource control reconfiguration message is used for causing the user equipment in a connected state to maintain a connected state and be handed over to the target network standard.

According to a second aspect, this application provides an electronic device, including: one or more processors; and one or more memories, where the one or more memories store one or more programs, and when the one or more programs are executed by the one or more processors, the electronic device is caused to perform the communication method according to the foregoing first aspect and the possible implementations of the foregoing first aspect.

According to a third aspect, this application provides a computer-readable medium. The readable medium stores instructions. When the instructions are run on a computer, the computer is caused to perform the communication method according to the foregoing first aspect and the possible implementations of the foregoing first aspect.

### BRIEF DESCRIPTION OF DRAWINGS

FIG. 1 is a schematic diagram of a paging scenario according to this application;
FIG. 2 is a schematic flowchart of paging before and after UE is migrated from a current network standard to a target network standard according to this application;
FIG. 3 is a schematic implementation flowchart of a communication method according to Embodiment 1 of this application;
FIG. 4 is a schematic diagram of a paging cycle of UE and a paging cycle of a base station according to this application;
FIG. 5 is a schematic implementation flowchart of a communication method according to Embodiment 2 of this application;
FIG. 6 is a schematic implementation flowchart of a communication method according to Embodiment 3 of this application;
FIG. 7 is a schematic architectural diagram of a communication system applied to UE according to this application; and
FIG. 8 is a schematic structural diagram of UE according to this application.

### DESCRIPTION OF EMBODIMENTS

To make objectives, technical solutions, and advantages of the embodiments of this application clearer, the following describes the technical solutions in the embodiments of this application in detail with reference to the accompanying drawings and specific implementations of the specification.

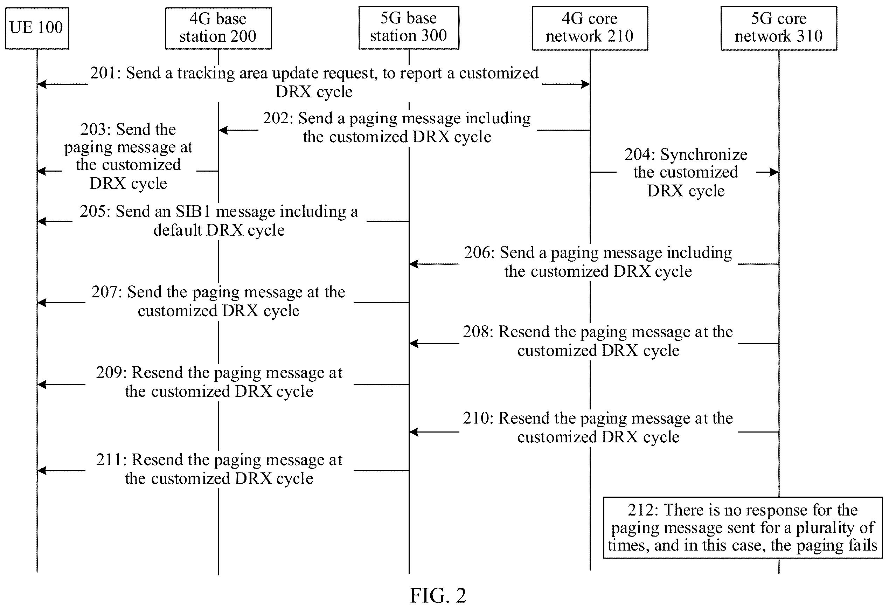

As described above, after UE that reports a customized DRX cycle in a current network standard is migrated to a target network standard, a paging failure may occur, and consequently, a call missing problem occurs on the UE. For ease of understanding, based on the foregoing scenario shown in FIG. 1, the following describes a schematic flowchart of paging before and after UE is migrated from a current network standard to a target network standard. As shown in FIG. 2, an example in which the current network standard is a 4G network and the target network standard is a 5G network is used, and the paging procedure may include the following steps.

201: UE 100 sends a tracking area update request (tracking area update request, TAU request) message to a 4G core network 210, to report a customized DRX cycle.

For example, when moved to a new tracking area (tracking area, TA) of the 4G network, the UE 100 may send the TAU request message to the 4G core network 210 of the 4G network, so that the 4G network determines a current location of the UE 100. In addition, the UE 100 may report the required customized DRX cycle in the TAU request message sent to the 4G core network 210.

202: The 4G core network 210 sends a paging message including the customized DRX cycle to a 4G base station 200.

For example, after receiving paging for the UE 100, the 4G core network 210 sends the paging message including the customized DRX cycle to the 4G base station 200. For example, the paging message sent by the 4G core network 210 to the 4G base station may include a field of the customized DRX cycle. In this manner, the customized DRX cycle is forwarded to the 4G base station 200.

203: The 4G base station 200 sends the paging message to the UE 100 at the customized DRX cycle.

For example, after receiving the customized DRX cycle, the 4G base station 200 may compare the customized DRX cycle with a default DRX cycle of the 4G network, and determine a shorter one as a paging cycle.

204: The 4G core network 210 synchronizes the customized DRX cycle to a 5G core network 310.

For example, when determining that the UE 100 is to be migrated to the 5G network, the 4G core network 210 may synchronize the customized DRX cycle to the 5G core network 310.

205: A 5G base station 300 sends an SIB1 message including a default DRX cycle to the UE 100.

For example, after the UE 100 is migrated to the 5G network, the 5G base station 300 may send the default DRX cycle of the 5G network to the UE 100 based on a system information block (system information block, SIB) message. For example, the 5G base station 300 may send the SIB1 message including the default DRX cycle to the UE 100.

206: The 5G core network 310 sends a paging message including the customized DRX cycle to the 5G base station 300.

For example, when receiving paging for the UE 100, the 5G core network 310 may send the paging message including the customized DRX cycle to the 5G base station 300, to synchronize the customized DRX cycle to the 5G base station 300.

207: The 5G base station 300 sends the paging message to the UE 100 at the customized DRX cycle.

For example, after receiving the customized DRX cycle sent by the 5G core network 310, the 5G base station 300 may compare the customized DRX cycle with the default DRX cycle of the 5G network, and determine a shorter one as a paging cycle. It may be understood that, to achieve a low delay effect, the customized DRX cycle is generally shorter than the default DRX cycle. Therefore, the 5G base station 300 may use the customized DRX cycle as the paging cycle for sending a paging message to the UE 100.

However, because the UE 100 does not report the customized DRX cycle in the 5G network, the UE 100 migrated to the 5G network is to use the default DRX cycle of the 5G network as a paging cycle for receiving a paging message. The paging cycle of the 5G base station 300 and the paging cycle of the UE 100 are inconsistent. As a result, the UE 100 cannot receive some of paging messages.

208: The 5G core network 310 resends the paging message to the 5G base station 300 at the customized DRX cycle.

209: The 5G base station 300 resends the paging message to the UE 100 at the customized DRX cycle.

210: The 5G core network 310 resends the paging message to the 5G base station 300 at the customized DRX cycle.

211: The 5G base station 300 resends the paging message to the UE 100 at the customized DRX cycle.

212: There is no response for the paging resent by the 5G core network 310 for a plurality of times, and in this case, the paging fails.

It may be understood that, because the UE 100 does not receive the paging message, the 5G base station 300 may resend the paging message to the UE 100 for a plurality of times, but similarly, the problem cannot be resolved because the paging cycles are inconsistent. Specifically, for a process in which the 5G base station 300 resends the paging message to the UE 100, refer to the foregoing steps 208 to 212.

It may be learned from the relevant descriptions of the foregoing steps 201 to 212 that, after the UE 100 reports the customized DRX cycle in the current network standard, namely, the 4G core network 210, the 4G core network 210 may synchronize the customized DRX cycle to a core network of the target network standard, namely, the 5G core network 310. In this way, the base station 300 of the 5G core network 310 may use the customized DRX cycle as the paging cycle for sending a paging message to the UE. However, because a service performed in the 5G network have a low requirement on a delay, the UE may not need to reduce a service delay by shortening a DRX cycle, so that the UE may not report the customized DRX cycle to the 5G core network 310. Therefore, the UE 100 is to use the default DRX cycle of the 5G network as the paging cycle for receiving a paging message. In this case, if the default DRX cycle of the 5G network used by the UE 100 is different from the customized DRX cycle synchronized from the 4G core network 210 to the 5G core network 310, the UE 100 cannot receive the paging message sent by the base station 300 of the 5G core network 310.

In other words, it may be learned from the foregoing descriptions that main reasons why the UE 100 cannot receive the paging message sent by the base station 300 of the 5G core network 310 includes two factors. One of the factors is that, after the UE 100 is handed over from the 4G network to the 5G network, the 4G core network 210 synchronizes, to the 5G core network 310, the customized DRX cycle reported by the UE 100 to the 4G core network 210. The other factor is that, after the UE 100 is handed over from the 4G network to the 5G network, the UE 100 does not report the customized DRX cycle to the 5G core network 310, but uses the default DRX cycle corresponding to the 5G network as the paging cycle for receiving a paging message.

Therefore, this application provides a communication method. In the method, the problem mentioned above may be resolved in a manner of sending signaling for canceling a customized DRX cycle or signaling for a customized DRX cycle at different occasions. For example, in some embodiments, in the method, when UE has determined that the UE needs to be handed over from a current network standard to a target network standard but has not been handed over to the target network standard, the UE may be controlled to send signaling for canceling a customized DRX cycle to the current network standard. An example in which the current network standard is a 4G network, and the target network standard is a 5G network is used. A 4G base station sends, to the UE, a handover and reconfiguration instruction or a redirection instruction that indicates the UE to access the 5G network, and before accessing the 5G network based on the received handover and reconfiguration instruction or the received redirection instruction, the UE may send the signaling for canceling the customized DRX cycle to a 4G core network. It may be learned from the foregoing step 207 that, the UE handed over to the 5G network is to use a default DRX cycle of the 5G network as a paging cycle for receiving a paging message. However, because the 4G core network synchronizes the customized DRX cycle to a 5G core network, a 5G base station uses the customized DRX cycle as a paging cycle for sending a paging message to the UE. As a result, the paging cycle of the UE and the paging cycle of the 5G base station are inconsistent. Therefore, in this embodiment, the signaling for canceling the customized DRX cycle is sent to the 4G core network, to avoid that the 4G core network synchronizes the customized DRX cycle to the 5G core network. In this way, that the paging cycle of the 5G base station and the paging cycle of the UE are inconsistent may be avoided. Therefore, the above-mentioned problem that, due to inconsistency between the paging cycle of the UE and the paging cycle of the network side device of the target network standard, the UE cannot receive, after the network handover, a paging message sent by the network device of the target network standard is resolved.

For example, in some other embodiments, in the method, signaling for a customized DRX cycle may be sent to a target network standard when UE is handed over from a current network standard to the target network standard. For example, during registration with the target network standard based on a handover and reconfiguration instruction or a redirection instruction sent by the current network standard, the UE may be controlled to send, to the target network standard, signaling for reporting the customized DRX cycle. Specifically, the signaling for reporting the customized DRX cycle may be set in a registration request sent by the UE for accessing the target network standard. An example in which the current network standard is a 4G network, and the target network standard is a 5G network is used. A 4G base station sends, to the UE, a handover and reconfiguration instruction or a redirection instruction that indicates the UE to access the 5G network, and the UE needs to send registration request (registration request) information to a 5G core network to access the 5G network, and further, the foregoing signaling for reporting the customized DRX cycle may be set in the registration request information. It may be learned from the foregoing step 207 that, after the 5G core network receives a customized DRX cycle synchronized by a 4G core network, a 5G base station is to use the customized DRX cycle as a paging cycle for sending a paging message to the UE. However, because the UE does not report the customized DRX cycle in the 5G network, the UE is to use a default DRX cycle as a paging cycle for receiving a paging message. As a result, the paging cycle of the UE and the paging cycle of the 5G base station are inconsistent. Therefore, in this embodiment, the signaling for reporting the customized DRX cycle is sent to the 5G core network, so that the UE uses the customized DRX cycle as the paging cycle. In this way, that the paging cycle of the 5G base station and the paging cycle of the UE are inconsistent may be avoided. Therefore, the above-mentioned problem that, due to inconsistency between the paging cycle of the UE and the paging cycle of the network side device of the target network standard, the UE cannot receive, after the network handover, a paging message sent by the network device of the target network standard is resolved.

For example, in some other embodiments, in the method, during registration with a target network standard based on a handover and reconfiguration instruction or a redirection instruction sent by a current network standard, UE may be controlled to send signaling for canceling a customized DRX cycle to the target network standard. Specifically, the signaling for canceling the customized DRX cycle may be set in a registration request sent by the UE for accessing the target network standard. An example in which the current network standard is a 4G network, and the target network standard is a 5G network is used. The foregoing signaling for canceling the customized DRX cycle may be set in the foregoing registration request information. It may be learned from the foregoing step 207 that, the UE handed over to the 5G network is to use a default DRX cycle of the 5G network as a paging cycle for receiving a paging message. However, because a 5G base station uses the customized DRX cycle received by a 5G core network as a paging cycle, the paging cycle of the UE and the paging cycle of the 5G base station are inconsistent. Therefore, in this embodiment, the signaling for canceling the customized DRX cycle is sent to the 5G core network, to avoid that the 5G base station uses the customized DRX cycle as the paging cycle. In this way, that the paging cycle of the 5G base station and the paging cycle of the UE are inconsistent may be avoided. Therefore, the above-mentioned problem that, due to inconsistency between the paging cycle of the UE and the paging cycle of the network side device of the target network standard, the UE cannot receive, after the network handover, a paging message sent by the network device of the target network standard is resolved.

It may be understood that, UE applicable to the communication method provided in this application may include, but is not limited to, a mobile phone, a tablet computer, a desktop computer, a laptop computer, a handheld computer, a netbook, an augmented reality (augmented reality, AR) device/a virtual reality (virtual reality, VR) device, a smart television, a wearable device such as a smart watch, an in-vehicle device, a portable game console, a portable music player, and another electronic device with one or more processors. A network device applicable to the method includes, but is not limited to, a base station of a 2G/3G/4G/5G/5.5G/6G network standard. The base station of each foregoing network device has a corresponding core network, and the user equipment may be connected to the corresponding core network via the base station.

Based on the foregoing scenario shown in FIG. 1, specific implementation processes of different manners of negotiating the DRX cycle provided in the communication method provided in this application are described in detail below with reference to different embodiments.

It is to be declared that, in the embodiments of this application, the steps in the methods and procedures are numbered for ease of reference, but not for limiting a sequence. If there is a sequence between the steps, the text descriptions shall prevail.

### Embodiment 1

This embodiment of this application describes a specific implementation process of a communication method in which before UE is handed over to a second network standard, a DRX cycle used by a network device of the second network standard and a DRX cycle used by the UE are unified in a manner of sending, to a first network standard, signaling for canceling a DRX cycle.

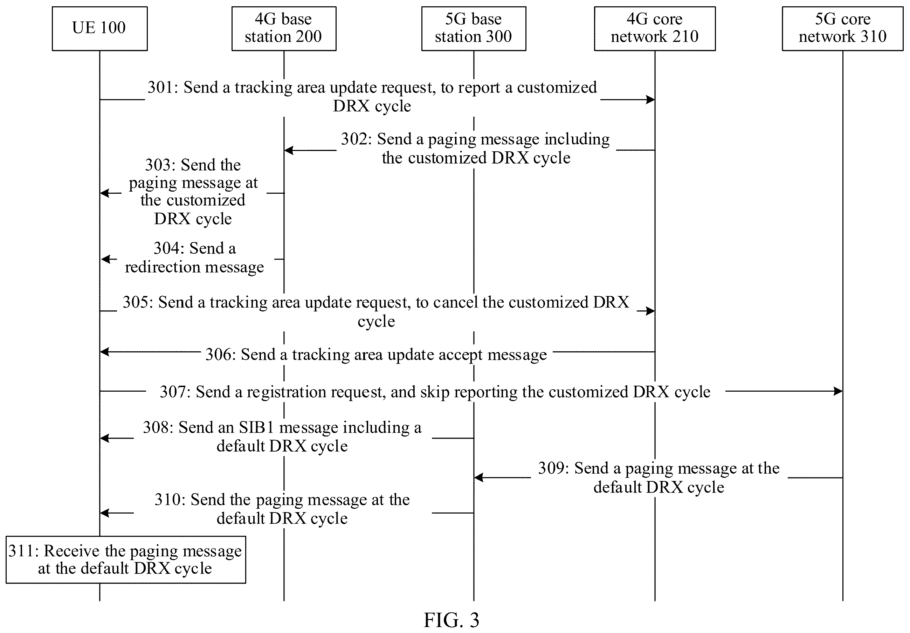

FIG. 3 is a schematic implementation flowchart of a communication method according to an embodiment of this application. It may be understood that, the procedure shown in FIG. 3 relates to interaction between UE 100, a 4G base station 200, a 4G core network 210, a 5G base station 300, and a 5G core network 310.

As shown in FIG. 3, the implementation procedure may include the following steps.

301: The UE 100 sends a tracking area update request to the 4G core network 210, to report a customized DRX cycle.

For example, the UE 100 may report the required customized DRX cycle in the TAU request message sent to the 4G core network 210. For example, a default DRX cycle of a 4G network may be 128 milliseconds, and in a low-delay service scenario, the UE 100 may need a shorter DRX cycle to shorten a time interval of obtaining service data, to reduce a service delay. For example, in a gaming scenario, the UE 100 may need to reduce the DRX cycle from 128 milliseconds to 32 milliseconds. In this case, the UE 100 may report a customized DRX cycle of 32 milliseconds to the 4G core network 210 in the TAU request message. It may be understood that, to reduce the service delay, the customized DRX cycle reported by the UE 100 is generally shorter than a default DRX cycle.

In an example manner, according to the 3rd generation partnership project (3rd generation partnership project, 3GPP) 24.008 protocol, a message field for reporting the customized DRX cycle of 32 milliseconds by the UE 100 may be: CN Specific DRX cycle length coefficient 6 and T=32. It may be understood that, the UE 100 may alternatively set a custom parameter corresponding to the customized DRX cycle in the TAU request message, and the custom parameter is not limitatively described herein.

302: The 4G core network 210 sends a paging message including the customized DRX cycle to the 4G base station 200.

For example, after receiving paging for the UE 100, the 4G core network 210 sends the paging message including the customized DRX cycle to the 4G base station 200. In this manner, the customized DRX cycle is forwarded to the 4G base station 200.

303: The 4G base station 200 sends the paging message to the UE 100 at the customized DRX cycle.

For example, after receiving the customized DRX cycle, the 4G base station 200 may compare the customized DRX cycle with the default DRX cycle of the 4G network, and determine a shorter one as a paging cycle. For example, the customized DRX cycle reported by the UE 100 is 32 milliseconds, and the default DRX cycle of the 4G network is 128 milliseconds. The 4G base station 200 determines that the customized DRX cycle is shorter than the default DRX cycle of the 4G network. Therefore, the customized DRX cycle may be determined as the paging cycle for sending a paging message to the UE 100.

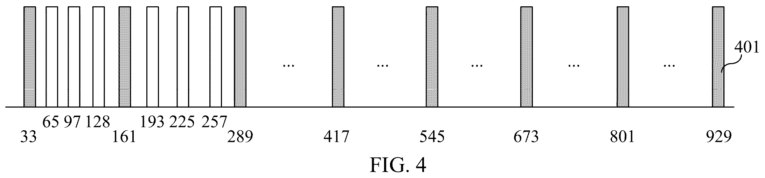

Refer to FIG. 4. An example in which the customized DRX cycle is 32 milliseconds and the default DRX cycle of the 4G network is 128 milliseconds is used below for describing impact of a paging cycle of the UE 100 and the paging cycle of the 4G base station 200 on reception of a paging message in detail. Each column shown in FIG. 4 represents a paging occasion (PO) at which the 4G base station 200 can send a paging message to the UE 100 at the specific DRX cycle of 32 milliseconds, where a column 401 represents a PO at which the UE 100 can receive a paging message at the default DRX cycle of 128 milliseconds, and the column 401 includes columns with frame numbers 33, 161, 289, 417, 545, 673, 801, and 929. For example, the 4G base station 200 sends a paging message to the UE 100 at a PO at a 65^{th} frame. However, the 65^{th} frame is not a PO at which the UE 100 receives a paging message. As a result, the UE 100 cannot receive the paging message at the 65^{th} frame. Conversely, it may be understood that when the paging cycle of the UE 100 is the same as the paging cycle of the 4G base station 200, the UE 100 can receive the paging message sent by the 4G base station 200.

In step 303, the 4G base station 200 uses the customized DRX cycle as the paging cycle for sending a paging message to the UE 100. In addition, the UE 100 uses the customized DRX cycle as the paging cycle for receiving a paging message. The paging cycle of the 4G base station 200 is the same as the paging cycle of the UE 100. Therefore, based on the foregoing descriptions of FIG. 4, it may be understood that, the UE 100 camping on the 4G network does not have a call missing problem caused because the paging cycle of the UE 100 does not match the paging cycle of the 4G base station.

304: The 4G base station 200 sends a redirection message to the UE 100.

For example, if signal quality of a 5G network is better than that of the 4G network on which the UE 100 currently camps, the 4G base station 200 may send the redirection message or a handover and reconfiguration message to the UE 100, to indicate the UE 100 to be migrated to the 5G network. The redirection message includes a radio resource control release (radio resource control release, RRCrelease) message carrying a redirection (redirection) indication. The RRCrelease message is used for causing the UE 100 in a connected state to be redirected to the 5G network after an RRC connection is released. The handover and reconfiguration message includes an RRC reconfiguration (radio resource control reconfiguration, RRCreconfiguration) message carrying a handover (target cell) indication. The RRCreconfiguration is used for causing the UE 100 in a connected state to maintain a connected state and be handed over to the 5G network.

The 4G base station 200 may determine, based on an inter-system measurement event, for example, a B1 event and/or a B2 event, measured and reported by the UE 100, that the signal quality of the 5G network is better than that of the 4G network on which the UE 100 currently camps, so that the 4G base station 200 may send the redirection message or the handover and reconfiguration message to the UE 100. Alternatively, the 4G base station 200 may actively send the redirection message or the handover and reconfiguration message to the UE 100, to cause the UE 100 to be migrated to the 5G network. A specific scenario in which the 4G base station 200 sends the redirection message or the handover and reconfiguration message to the UE 100 is not limitatively described.

305: The UE 100 sends a tracking area update request to the 4G core network 210, to cancel the customized DRX cycle.

For example, after receiving the redirection message or the handover and reconfiguration message sent by the 4G base station 200, the UE 100 may send, before being migrated to the 5G network, signaling to the 4G core network 210 to cancel the customized DRX cycle reported by the UE 100 in the 4G network. For example, before being migrated to the 5G network, the UE 100 may send the TAU request message to the 4G core network 210 to inform the 4G core network 210 that the UE 100 is to be migrated to the 5G network, and include, in the TAU request message, a parameter or a field for canceling the customized DRX cycle.

In an example manner, the UE 100 may define a parameter relevant to the customized DRX cycle in the TAU request message, for example, may customize a parameter indicating whether the UE 100 updates the customized DRX cycle and/or a parameter indicating a value of an updated customized DRX cycle of the UE 100.

The parameter indicating whether the UE 100 updates the customized DRX cycle may be, for example, Req_drx_params_inc. Specifically, Req_drx_params_inc=1 may indicate that the UE 100 needs to update the customized DRX cycle. Conversely, Req_drx_params_inc=0 may indicate that the UE 100 does not need to update the customized DRX cycle. It may be understood that, a correspondence between a parameter value of Req_drx_params_inc and whether to update the customized DRX cycle may be determined according to a set determining rule. The determining rule is not limitatively described herein.

The parameter indicating the value of the updated customized DRX cycle of the UE 100 may be, for example, cycle_len_coeff. Specifically, cycle_len_coeff=32 may indicate that the customized DRX cycle reported by the UE 100 is 32 milliseconds; and cycle_len_coeff=0 may indicate that the UE 100 cancels the customized DRX cycle and uses the default DRX cycle as a paging cycle of a paging process. It may be understood that, a correspondence between a parameter value of cycle_len_coeff and the value of the customized DRX cycle may be determined according to a set matching rule. The matching rule is not limitatively described herein.

Based on the foregoing descriptions, the TAU request message sent by the UE 100 to the 4G core network 210 may include parameter information: Req_drx_params_inc=1 and cycle_len_coeff=0. Further, the UE 100 may inform, based on the TAU request message, the 4G core network 210 to cancel the previously reported customized DRX cycle, and use the default DRX cycle of the 4G network as the paging cycle of the paging process.

In addition, it may be learned from the foregoing step 204 that the 4G core network 210 may synchronize the customized DRX cycle to the 5G core network 310 when determining that the UE 100 is to be migrated to the 5G network. For example, the customized DRX cycle may be synchronized to the 5G core network 310 when the 4G base station 200 sends the redirection message or the handover and reconfiguration message to the UE 100. It may be understood that, before being migrated to the 5G network based on the redirection message or the handover and reconfiguration message, the UE 100 has canceled the customized DRX cycle customized in the 4G network. Therefore, if the 4G core network 210 has not synchronized the customized DRX cycle to the 5G core network 310 when the UE 100 cancels the customized DRX cycle, a mechanism in which the 4G core network 210 synchronizes the customized DRX cycle to the 5G core network 310 is not triggered. In this way, a network device of the 5G network still uses a default DRX cycle of the 5G network as a paging cycle for paging the UE 100.

306: The 4G core network 210 sends a tracking area update accept (tracking area update accept, TAU accept) message to the UE 100.

For example, after receiving the TAU request message sent by the UE 100, the 4G core network 210 may send the TAU accept message to the UE 100, to inform the UE 100 that the TAU request message for canceling the customized DRX cycle has been received.

307: The UE 100 sends a registration request to the 5G core network 310, and skips reporting the customized DRX cycle.

For example, the UE 100 may be migrated to the 5G network based on the redirection message or the handover and reconfiguration message sent by the 4G base station 200, and may perform 5G registration based on a registration request message sent to the 5G core network 310. The registration request message may include relevant parameters such as the parameter Req_drx_params_inc and the parameter cycle _len _coeff for setting the customized DRX cycle.

The UE 100 may not report the customized DRX cycle in the registration request message for 5G network registration, so that the UE 100 uses the default DRX cycle in the following step 308 as a paging cycle for receiving a paging message of the 5G network. In an example manner in which the customized DRX cycle is not reported, the registration request message sent by the UE 100 may include Req_drx_params_inc=0.

308: The 5G base station 300 sends an SIB1 message including the default DRX cycle to the UE 100.

For example, after the UE 100 is migrated to the 5G network, the 5G base station 300 may send the default DRX cycle of the 5G network to the UE 100 based on a system information block (system information block, SIB) message. For example, the 5G base station 300 may send the SIB1 message including the default DRX cycle to the UE 100, so that the UE 100 obtains the default DRX cycle of the 5G network. It may be understood that the UE 100 may be migrated to the 5G network based on the inter-system measurement event reported to the 4G base station 200, or may be migrated to the 5G network based on the redirection message or the handover and reconfiguration message actively delivered by the 4G base station 200. A reason and a manner of migrating the UE 100 to the 5G network are not limitatively described herein.

309: The 5G core network 310 sends a paging message to the 5G base station 300 at the default DRX cycle.

For example, it may be learned from the foregoing step 305 that canceling, by the UE 100, the customized DRX cycle customized in the 4G network may avoid that the 4G core network 210 synchronizes the customized DRX cycle to the 5G core network 310. In this way, if the 5G core network 310 does not receive the customized DRX cycle synchronized by the 4G core network 210, the 5G core network 310 may send the paging message to the 5G base station 300 based on the default DRX cycle of the 5G network.

310: The 5G base station 300 sends the paging message to the UE 100 at the default DRX cycle.

For example, based on the foregoing step 309, if the 5G core network 310 does not receive the customized DRX cycle synchronized by the 4G core network 210, it may be understood that the 5G base station 300 is to use the default DRX cycle of the 5G network as the paging cycle for paging the UE 100. In this way, the paging message may be sent to the UE 100 based on the default DRX cycle of the 5G network.

311: The UE 100 receives the paging message at the default DRX cycle.

For example, because the UE 100 does not report the customized DRX cycle in the 5G network, the UE 100 is to use the default DRX cycle of the 5G network received in the foregoing step 308 as the paging cycle for receiving a paging message. In other words, the paging cycle at which the 5G base station 300 sends the paging message and the paging cycle at which the UE 100 receives the paging message are inconsistent, and both are the default DRX cycle of the 5G network.

Therefore, based on an implementation process of the foregoing steps 301 to 311, in the communication method provided in this embodiment of this application, before handover to the second network standard, the DRX cycle of the UE and the DRX cycle of the network device of the 5G network may be unified in a manner of sending signaling for canceling the DRX cycle to the first network standard, so that a call missing phenomenon caused because the paging cycle of the network device of the 5G network and the paging cycle of the UE 100 are inconsistent may be avoided.

### Embodiment 2

This embodiment of this application describes a specific implementation process of a communication method in which after UE is handed over to a second network standard, a DRX cycle used by a network device of the second network standard and a DRX cycle used by the UE are unified in a manner of sending signaling for reporting a customized DRX cycle to the second network standard.

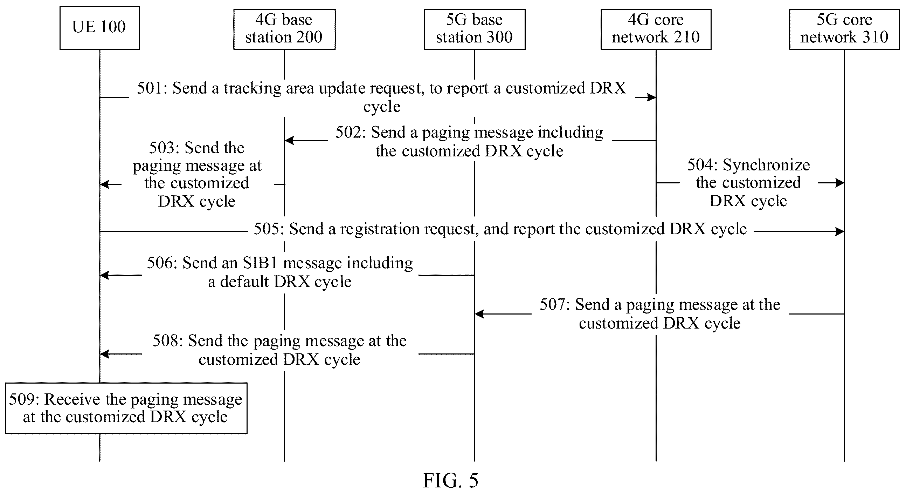

FIG. 5 is a schematic implementation flowchart of a communication method according to an embodiment of this application. It may be understood that, the procedure shown in FIG. 5 relates to interaction between UE 100, a 4G base station 200, a 4G core network 210, a 5G base station 300, and a 5G core network 310.

As shown in FIG. 5, the implementation procedure may include the following steps.

501: The UE 100 sends a tracking area update request to the 4G core network 210, to report a customized DRX cycle.

It may be understood that, for a process in which the UE 100 reports the customized DRX cycle to the 4G core network based on TAU request information, refer to relevant descriptions in the foregoing step 301, and details are not described herein again.

502: The 4G core network 210 sends a paging message including the customized DRX cycle to the 4G base station 200.

It may be understood that, for a process in which the 4G core network 210 informs the 4G base station 200 of the customized DRX cycle by sending the paging message, refer to relevant descriptions in the foregoing step 302, and details are not described herein again.

503: The 4G base station 200 sends the paging message to the UE at the customized DRX cycle.

It may be understood that, for a process in which the 4G base station 200 sends the paging message to the UE 100 at the customized DRX cycle, refer to relevant descriptions in the foregoing step 303, and details are not described herein again.

504: The 4G core network 210 synchronizes the customized DRX cycle to the 5G core network 310.

For example, when determining that the UE 100 is to be migrated to a 5G network, the 4G core network 210 may synchronize the specific DRX cycle to the 5G core network 310. In an example manner in which the 4G core network 210 synchronizes the specific DRX cycle, for example, the 4G base station 200 may determine, based on an inter-system measurement event reported by the UE 100, that signal quality of the 5G network is better than that of a 4G network, to indicate the UE 100 to be migrated to the 5G network. When the 4G base station 200 sends a redirection message or a handover and reconfiguration message to the UE 100 for migration to the 5G network, the 4G core network 210 may synchronize the specific DRX cycle to the 5G core network 310.

In another example manner in which the 4G core network 210 synchronizes the specific DRX cycle, for example, when the 4G base station 200 actively indicates the UE 100 to be migrated to the 5G network, the 4G core network 210 may synchronize the specific DRX cycle to the 5G core network 310.

In another example manner in which the 4G core network 210 synchronizes the specific DRX cycle, for example, when the UE 100 sends the TAU request information to the 4G core network 210 to inform the 4G core network 210 that the UE 100 is to be migrated to the 5G network, the 4G core network 210 may synchronize the specific DRX cycle to the 5G core network 310.

505: The UE 100 sends a registration request to the 5G core network 310, and reports the customized DRX cycle.

For example, after being migrated to the 5G network based on the redirection message or the handover and reconfiguration message sent by the 4G base station 200, the UE 100 may perform 5G registration based on the registration request message sent to the 5G core network 310. The UE 100 may report a customized DRX cycle the same as the customized DRX cycle of the 4G network in the registration request message. The foregoing parameter Req_drx_params_inc and the parameter cycle _len_coeff are still used as an example. If the UE 100 reports a customized DRX cycle of 32 milliseconds to the 4G network based on the foregoing step 501, the registration request message may include parameter information: Req_drx_params_inc=1 and cycle_len_coeff=32, to report the customized DRX cycle of 32 milliseconds to the 5G core network 310.

For ease of understanding, an example in which each customized DRX cycle reported by the UE 100 to the 5G core network 310 is 32 milliseconds is used below.

It may be understood that, because the UE 100 reports the customized DRX cycle of 32 milliseconds to the 5G core network 310, the UE 100 may use, based on the following step 509, the customized DRX cycle of 32 milliseconds as a paging cycle for receiving a paging message sent by the 5G base station 300.

506: The 5G base station 300 sends an SIB1 message including a default DRX cycle to the UE 100.

It may be understood that, for a process in which the 5G base station 300 sends the SIB1 message to the UE 100, refer to relevant descriptions in the foregoing step 308, and details are not described herein again. For ease of understanding, an example in which each default DRX cycle sent by the 5G base station 300 to the UE 100 is 128 milliseconds is used below.

507: The 5G core network 310 sends a paging message to the 5G base station 300 at the customized DRX cycle.

For example, based on the foregoing step 504, the 5G core network 310 receives the customized DRX cycle synchronized by the 4G core network 210. Therefore, when receiving paging for the UE 100, the 5G core network 310 may send a paging message including the customized DRX cycle to the 5G base station 300, to forward the customized DRX cycle to the 5G base station 300.

508: The 5G base station 300 sends the paging message to the UE 100 at the customized DRX cycle.

For example, after receiving the customized DRX cycle, the 5G base station 300 compares the customized DRX cycle with the default DRX cycle of the 5G network. As described above, to reduce a service delay, the customized DRX cycle customized by the UE 100 is generally shorter than the default DRX cycle. For example, the customized DRX cycle of 32 milliseconds is shorter than the default DRX cycle of 128 milliseconds of the 5G network. Therefore, the 5G base station 300 may use the customized DRX cycle of 32 milliseconds as a paging cycle for sending a paging message.

509: The UE 100 receives the paging message at the customized DRX cycle.

For example, based on the foregoing step 505, because the UE 100 reports the customized DRX cycle the same as the customized DRX cycle in the 4G network to the 5G core network 310, the UE 100 uses the customized DRX cycle as the paging cycle for receiving a paging message. For example, if the UE 100 reports the DRX cycle of 32 milliseconds to the 5G core network 310, the UE 100 is to use the DRX cycle of 32 milliseconds as the paging cycle for receiving a paging message. Based on the foregoing step 508, the 5G base station 300 is to use the DRX cycle of 32 milliseconds synchronized by the 4G core network 210 as the paging cycle for sending a paging message. In other words, the paging cycle of the 5G base station 300 is the same as the paging cycle of the UE 100, and both are the customized DRX cycle of 32 milliseconds reported by the UE 100. Therefore, in the foregoing manner, a call missing phenomenon caused because the paging cycle of the 5G base station 300 and the paging cycle of the UE 100 are inconsistent may be avoided.

### Embodiment 3

This embodiment of this application describes a specific implementation process of a communication method in which after UE is handed over to a second network standard, a DRX cycle used by a network device of the second network standard and a DRX cycle used by the UE are unified in a manner of sending signaling for canceling a DRX cycle to the second network standard.

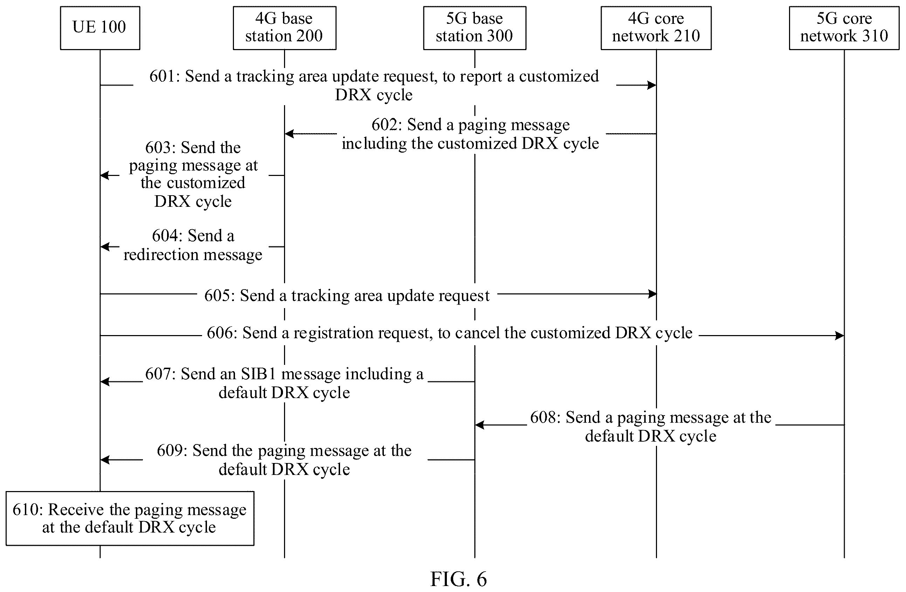

FIG. 6 is a schematic implementation flowchart of a communication method according to an embodiment of this application. It may be understood that, the procedure shown in FIG. 6 relates to interaction between a 4G base station 200, a 4G core network 210, a 5G base station 300, and a 5G core network 310.

As shown in FIG. 6, the implementation procedure may include the following steps.

601: The UE 100 sends a tracking area update request to the 4G core network 210, to report a customized DRX cycle.

It may be understood that, for a process in which the UE 100 reports the customized DRX cycle to the 4G core network based on TAU request information, refer to relevant descriptions in the foregoing step 301, and details are not described herein again.

602: The 4G core network 210 sends a paging message including the customized DRX cycle to the 4G base station 200.

It may be understood that, for a process in which the 4G core network 210 informs the 4G base station 200 of the customized DRX cycle by sending the paging message, refer to relevant descriptions in the foregoing step 302, and details are not described herein again.

603: The 4G base station 200 sends the paging message to the UE 100 at the customized DRX cycle.

It may be understood that, for a process in which the 4G base station 200 sends the paging message to the UE 100 at the customized DRX cycle, refer to relevant descriptions in the foregoing step 303, and details are not described herein again.

604: The 4G base station 200 sends a redirection instruction to the UE 100.

It may be understood that, for a process in which the 4G base station 200 sends the redirection message to the UE 100, refer to relevant descriptions in the foregoing step 304, and details are not described herein again.

605: The UE 100 sends a tracking area update request to the 4G core network 210.

For example, before being migrated to the 5G network, the UE 100 may send the TAU request message to the 4G core network 210 to inform the 4G core network 210 that the UE 100 is to be migrated to the 5G network. The UE 100 may keep the previously reported customized DRX cycle unchanged based on the TAU request message. For examples, the TAU request message may include: Req_drx_params_inc=0. It may be understood that, because the UE 100 does not change the customized DRX cycle, the 4G core network 210 is to synchronize the customized DRX cycle to the 5G core network 310.

606: The UE 100 sends a registration request to the 5G core network 310, to cancel the customized DRX cycle.

For example, the UE 100 may be migrated to the 5G network based on the redirection message or a handover and reconfiguration message sent by the 4G base station 200, and may perform 5G registration based on a registration request message sent to the 5G core network 310. The registration request message may include relevant parameters such as the parameter Req_drx_params_inc and the parameter cycle_len_coeff for setting the customized DRX cycle. It may be learned from the foregoing step 605 that the 4G core network 210 is to synchronize the customized DRX cycle to the 5G core network 310. In this way, the UE 100 may cancel the customized DRX cycle synchronized by the 4G network in the registration request message, so that both a network device of the 5G network and the UE 100 use the default DRX cycle of the 5G network as a paging cycle. For example, the registration request message sent by the UE 100 to the 5G core network 310 may include: Req_drx_params_inc=1 and cycle_len_coeff=0.

It may be understood that, because the UE 100 requests the 5G core network 310 to cancel the customized DRX cycle synchronized by the 4G network, in the following step 608, the 5G core network 310 is to use the default DRX cycle of the 5G network as a paging cycle for sending a paging message.

607: The 5G base station 300 sends an SIB1 message including the default DRX cycle to the UE 100.

It may be understood that, for a process in which the 5G base station 300 sends the SIB1 message to the UE 100 to cause the UE 100 to obtain the default DRX cycle of the 5G network, refer to relevant descriptions in the foregoing step 308, and details are not described herein again.

608: The 5G core network 310 sends a paging message to the 5G base station 300 at the default DRX cycle.

For example, based on the foregoing step 606, because the customized DRX cycle received by the 5G core network 310 from the 4G network has been canceled, the 5G base station 310 is to use the default DRX cycle of the 5G network as the paging cycle for sending a paging message. Therefore, after receiving paging for the UE 100, the 5G core network 310 is to send the paging message to the 5G base station 300 at the default DRX cycle of the 5G network.

609: The 5G base station 300 sends the paging message to the UE 100 at the default DRX cycle.

For example, because only the default DRX cycle of the 5G network exists in the 5G network, the 5G base station 300 uses the default DRX cycle of the 5G network as a paging cycle for sending a paging message, and sends the received paging message to the UE 100 at the default DRX cycle.

610: The UE 100 receives the paging message at the default DRX cycle.

For example, because the UE 100 does not report the customized DRX cycle to the 5G network, the UE 100 is to use the default DRX cycle of the 5G network as a paging cycle for receiving a paging message. It may be learned from the foregoing step 609 that, the paging cycle at which the 5G base station 300 sends the paging message is the same as the paging cycle at which the UE 100 receives the paging message, and both are the default DRX cycle of the 5G network. Therefore, in the foregoing manner, a call missing phenomenon caused because the paging cycle of the network device of the 5G network and the paging cycle of the UE 100 are inconsistent may be avoided.

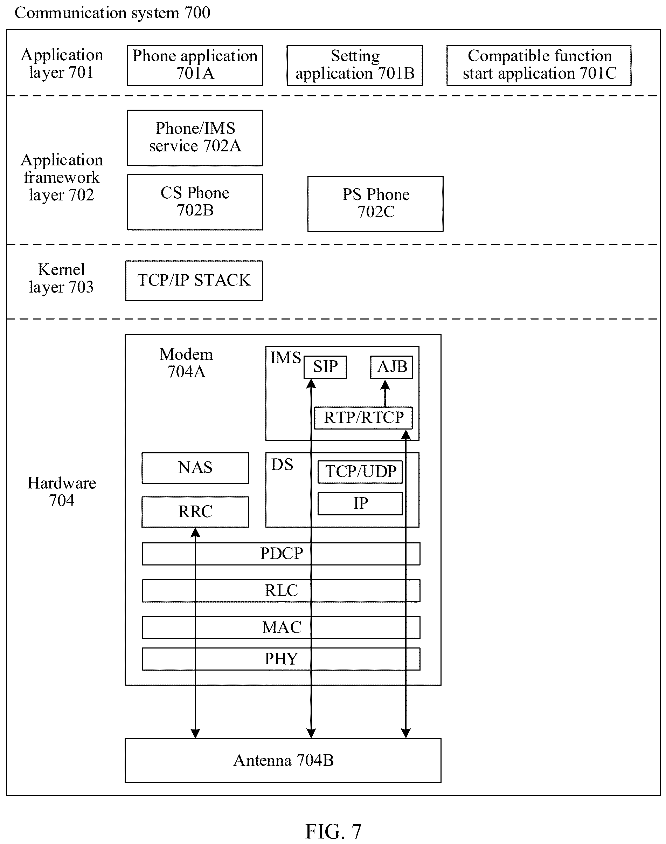

In an example, FIG. 7 is a schematic architectural diagram of a communication system applied to UE according to an embodiment of this application.

It should be understood that, in a layered architecture used in a communication system 700 currently applied to the UE, software may be divided into a plurality of layers. The layers communicate with each other through a software interface. The layers may include, for example, an application layer, an application framework layer, an Android^{™} runtime (Android^{™} runtime) and a system library, a hardware abstraction layer, and a kernel layer. Only a layer on which a functional module involved in the communication method provided in the embodiments of this application is located is used as an example for description below.

In FIG. 7, the layers are respectively an application layer 701, an application framework layer 702, a kernel layer 703, and hardware 704 from top to bottom. The application layer 701 may include a series of application packages.

Still refer to FIG. 7, specifically, in the technical solution provided in the embodiments of this application, the application layer 701 may include a phone application 701A, a setting application 701B, a compatible function start application 701C, and the like. The phone application 701A may be provided for a user to initiate a call service operation, and the compatible function start application 701C may provide an entrance for starting a compatible function.

Still refer to FIG. 7, the application framework layer 702 provides an application programming interface (application programming interface, API) and a programming framework for the applications at the application layer. In some implementations, the programming interface and the programing framework may be described as functions.

For example, the application framework layer 702 may include a phone/IMS service 702A, a CS Phone 702B, a PS Phone 702C, and the like. The phone/IMS service 702A is an IP multimedia subsystem in a communication system of UE 100, is configured for establishing a media session, and may implement voice services, such as a switch between a 4G network and a 5G network, under a packet switched network. A voice service of the 4G network supported by the IMS is referred to as VOLTE, and a voice service of the 5G network supported by the IMS is referred to as VONR. After the media session is established, in a call process, the IMS service 702A invokes, based on a network standard of the UE 100, an SIP module in Modem, to make various SIP requests, such as an INVITE message, an ACK message, and an HTTP 700 OK message.

The CS Phone 702B is configured for a call of a circuit switched (circuit switched, CS) network. When the IMS service 702A is unavailable (a mobile phone camps on 2G/3G or the IMS is not successfully registered), a call can be realized through a CS call. The CS Phone 702B may also be configured for performing domain transfer redial (commonly known as CS retry) when an IMS call fails.

The PS Phone 702C is configured for a call of a packet switched (packet switched, PS) network. When the IMS service 702A is available, the IMS call (VOLTE or VONR) may be performed through a PS domain.

It should be understood that, the foregoing description is merely an example listed for a better understanding of the specific implementation of the communication method provided in this application, and does not constitute a limitative description of the embodiments of this application.

In addition, it may be understood that, the kernel layer 703 in the Android system is a layer between the hardware 704 and the software.

Still refer to FIG. 7, specifically, in the technical solutions provided in the embodiments of this application, the kernel layer 703 may include a transmission control protocol/internet protocol stack (transmission control protocol/internet protocol stack, TCP/IP protocol stack). The TCP/IP protocol stack refers to a protocol suite that can implement information transmission among different networks. Specifically, in actual application, the TCP/IP protocol stack of the kernel layer 703 mainly serves an Internet access service, and also provides a service for video-related data processing during a call service.

Still refer to FIG. 7, the hardware 704 of the communication system 700 may include a modem (Modem) 704A, an antenna 704B, and the like. The antenna 704B is configured to receive content, such as the SIB1 message, the paging message, and the TAU accept message described in the foregoing embodiments, sent by a network side. For example, a data packet encrypted through a PDCP is to sequentially pass through an RLC layer, a MAC layer, and a PHY layer, to be transmitted to the antenna 704B. Finally, the data packet is sent to the network side through the antenna 704B. Correspondingly, the data packet received by the antenna 704B from the network side is to be transmitted through the PHY layer, the MAC layer, and the RLC layer sequentially to the PDCP layer for processing.

It may be understood that, in a process in which the user starts the call service based on the phone application 701A of the UE 100, the foregoing phone/IMS service 702A may create a call, a VOLTE or VONR call is performed through the PS domain based on the PS Phone 702C, and an IMS module in the Modem 704A is invoked to generate signaling in the call service.

In addition, it should be further noted that, all processing of various SIP signaling messages involved in the embodiments of this application can be implemented by an SIP module in the Modem 704A. all processing of various RRC messages such as RRC release messages and RRC reconfiguration messages involved in the embodiments of this application can be implemented by an RRC module in the Modem 704A.

It may be understood that the layers in the software structure of the communication system shown in FIG. 7 and the component included in each layer do not constitute a specific limitation on the UE 100. In some other embodiments of this application, the communication system of the UE 100 may include more or fewer layers than those shown in FIG. 7, and each layer may also include more or fewer components than those shown in FIG. 7. This is not limited in this application.

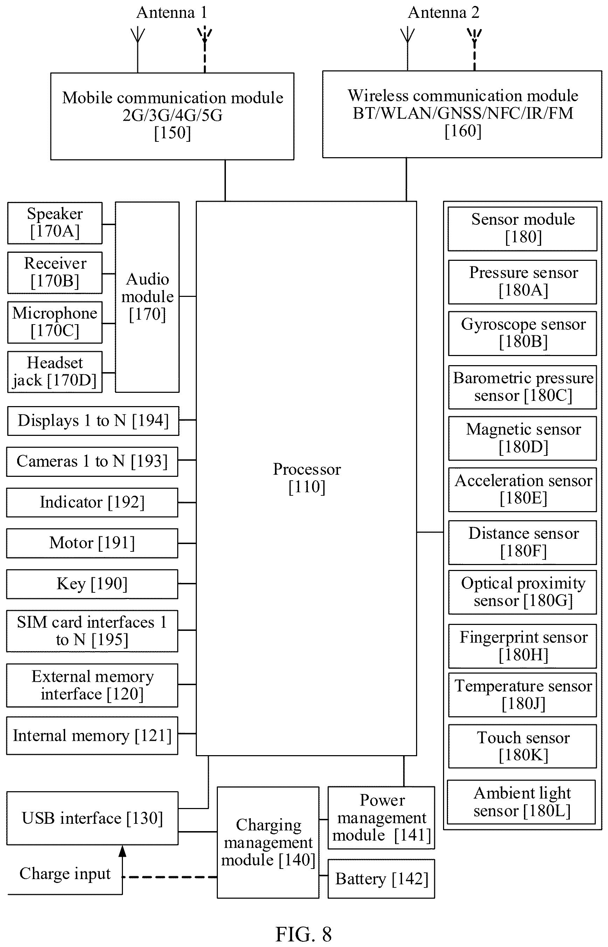

FIG. 8 is a schematic structural diagram of a user terminal according to an embodiment of this application. It may be understood that the user terminal may include the foregoing UE 100.

As shown in FIG. 8, the user terminal may include a processor 110, an external memory interface 120, an internal memory 121, a universal serial bus (universal serial bus, USB) interface 130, a charging management module 14030, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera lens 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, and the like.

It may be understood that an example structure in this embodiment of this application does not constitute a specific limitation on the user terminal. In some other embodiments of this application, the user terminal may include more or fewer components than those shown in the figure, or some components may be combined, or some components may be split, or components are arranged in different manners. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. The controller may generate an operation control signal according to instruction operation code and a sequence signal, to complete control of fetching and executing instructions.

A memory may be further disposed in the processor 110, and is configured to store instructions and data. In some embodiments, the memory in the processor 110 is a cache memory. The memory may store instructions or data that has just been used or recycled by the processor 110. If the processor 110 needs to use the instructions or the data again, the processor may directly invoke the instructions or the data from the foregoing memory, which avoids repeated access, and reduces a waiting time of the processor 110, thereby improving system efficiency.

A wireless communication function of the user terminal may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the user terminal may be configured to cover one or more communication frequency bands. Different antennas may be multiplexed to improve antenna utilization. For example, the antenna 1 may be multiplexed as a diversity antenna of a wireless local area network. In some other embodiments, the antennas may be used with a tuning switch.

The mobile communication module 150 may provide a solution to wireless communication such as 2G/3G/4G/5G applied to the user terminal. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same component.

The modem processor may include a modulator and a demodulator. The modulator is configured to modulate a to-be-sent low-frequency baseband signal into a medium-high-frequency signal. The demodulator is configured to demodulate the received electromagnetic wave signal into a low-frequency baseband signal. Next, the demodulator transmits the demodulated low-frequency baseband signal to the baseband processor for processing. The low-frequency baseband signal is processed by the baseband processor and then transmitted to the application processor. The application processor outputs a sound signal through an audio device (not limited to the speaker 170A, the receiver 170B, or the like), or displays an image or a video through the display 194. In some embodiments, the modem processor may be an independent component. In some other embodiments, the modem processor may be independent of the processor 110, and the modem processor and the mobile communication module 150 or another functional module may be disposed in the same component.

The wireless communication module 160 may provide a solution to wireless communication including a wireless local area network (wireless local area networks, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like applied to the user terminal. The wireless communication module 160 may be one or more components into which at least one communication processing module is integrated. The wireless communications module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 of the user terminal are coupled, and the antenna 2 and the wireless communication module 160 are coupled, so that the user terminal can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, and/or IR technologies, and the like. The GNSS may include a global positioning system (global positioning system, GPS), a global navigation satellite system (global navigation satellite system, GLONASS), a Beidou navigation satellite system (beidou navigation satellite system, BDS), a quasi-zenith satellite system (quasi-zenith satellite system, QZSS) and/or satellite-based augmentation systems (SBAS).

The user terminal implements a display function by using the GPU, the display 194, the application processor, and the like. The GPU is a microprocessor for image processing, and is connected to the display 194 and the application processor. The GPU is configured to perform mathematical and geometric calculation, and is configured to render a graphic.

The external memory interface 120 may be configured to connect to an external storage card such as a micro SD card, to expand a storage capability of the user terminal. The external storage card communicates with the processor 110 by using the external memory interface 120, to implement a data storage function, for example, storing a file such as a music or a video in the external storage card.

The internal memory 121 may be configured to store computer executable program code, where the executable program code includes instructions. The internal memory 121 may include a program storage area and a data storage area. The program storage area may store an operating system, an application required by at least one function (for example, a sound playing function or an image playing function), and the like. The data storage region may store data (for example, audio data and an address book) and the like created when the user terminal is used. In addition, the internal memory 121 may include a high-speed random access memory, or may include a non-volatile memory such as at least one magnetic disk memory, a flash memory, or a universal flash storage (universal flash storage, UFS). The processor 110 runs the instructions stored in the internal memory 121 and/or the instructions stored in the memory disposed in the processor, to implement various functional applications and data processing of the user terminal.

The SIM card interface 195 is configured to connect to a SIM card. The SIM card may be inserted into the SIM card interface 195 or plugged from the SIM card interface 195, to come into contact with or be separated from the user terminal. The user terminal may support one or N SIM card interfaces. N is a positive integer greater than 1. The SIM card interface 195 may support a nano-SIM card, a micro-SIM card, a SIM card, and the like. A plurality of cards may all be inserted into a same SIM card interface 195. The plurality of cards may be of the same type or different types. The SIM card interface 195 may be compatible with different types of SIM cards. The SIM card interface 195 may also be compatible with an external storage card. The user terminal interacts with a network by using a SIM card, to implement functions such as a call and data communication. In some embodiments, the user terminal uses an eSIM, namely, an embedded SIM card. The eSIM card may be embedded in the user terminal and cannot be separated from the user terminal.

An embodiment of this application further provides a computer program product, configured to implement the communication method provided in the foregoing embodiments.

Embodiments of mechanisms disclosed in this application may be implemented in hardware, software, firmware, or a combination of the implementation methods. The embodiments of this application may be implemented as a computer program module or module code executed on a programmable system. The programmable system includes at least one processor, a storage system (including a volatile memory, a non-volatile memory, and/or a storage element), at least one input device, and at least one output device.

The computer module or module code may be used in input instructions, to execute functions described in this application and generate output information. The output information may be applied to one or more output devices in a known manner. For the objectives of this application, a processing system includes any system including a processor such as a digital signal processor (digital signal processor, DSP), a microcontroller, an application specific integrated circuit (application specific integrated circuit, ASIC), or a microprocessor.

The module code may be implemented by using a high-level modular language or an object-oriented programming language, for ease of communication with the processing system. When needed, the module code may be implemented by using an assembly language or a machine language alternatively. In fact, the mechanisms described in this application are not limited to a range of any specific programming language. In any case, the language may be a compiled language or an explained language.

In some cases, the disclosed embodiments may be implemented in hardware, firmware, software, or in any combination thereof. The disclosed embodiments may alternatively be implemented as instructions carried or stored on one or more transitory or non-transitory machine-readable (for example, computer-readable) storage medium. The instructions may be read and executed by one or more processors. For example, the instructions may be delivered through a network or another computer-readable medium. Therefore, the machine-readable medium may include any mechanism used for storing or transmitting information in a machine (for example, a computer) readable form, including but not limited to, a floppy disk, an optical disk, an optical disc, a magneto-optical disk, a read only memory (read only memory, ROM), a random access memory (random access memory, RAM), an erasable programmable read only memory (erasable programmable read only memory, EPROM), an electrically erasable programmable read-only memory (electrically erasable programmable read-only memory, EEPROM), a magnetic or optical card, a flash memory, or a tangible machine-readable memory used for transmitting information using the Internet through a propagation signal (for example, a carrier wave, an infrared signal, or a digital signal) in an electrical, optical, acoustic, or another form. Therefore, the machine-readable medium includes any type of machine-readable medium suitable for storing or transmitting electronic instructions or information in a machine (for example, a computer) readable form.

In this specification, a reference of "an embodiment" or "embodiments" means that a specific feature, structure, or characteristic that is described with reference to the embodiments is included in at least one example implementation solution or technology disclosed in the embodiments of this application. The appearance of each phrase "in an embodiment" in this specification does not necessarily refer to a same embodiment.

The disclosure of the embodiments of this application also relates to an apparatus for executing operations in the text. This apparatus may be specially constructed for a required purpose, or may include a general purpose computer selectively activated or reconfigured by a computer program stored in a computer. The computer program may be stored in a computer-readable medium such as, but not limited to, any type of disk including a floppy disk, an optical disk, a CD-RO, a magneto-optical disk, a read only memory (ROM), a random access memory (RAM), an EPROM, an EEPROM, a magnetic or optical card, an application specific integrated circuit (ASIC), or any type of medium suitable for storing electronic instructions, and each may be coupled to a computer system bus. In addition, the computer mentioned in this specification may include a single processor or may be an architecture involved in using a plurality of processors for increased computing power.

In addition, the language used in this specification has been primarily selected for readability and instructional purposes and may not have been selected to describe or limit a disclosed subject. Therefore, the disclosure of the embodiments in this application are intended to illustrate but not to limit the scope of the concepts discussed in this specification.

## Claims

1. A communication method, comprising:
assessing, by user equipment, a first network standard via a first network device, wherein the user equipment and the first network device perform paging based on a first paging cycle;
receiving, by the user equipment, a first instruction for handover from the first network standard to a second network standard; and
sending, by the user equipment, a paging cycle change instruction, wherein the paging cycle change instruction is used for causing a paging cycle of the user equipment to be the same as a paging cycle of a second network device corresponding to the user equipment after the user equipment accesses the second network standard.

2. The method according to claim 1, wherein the first network device comprises a first base station, and the user equipment is capable of connecting to a corresponding first core network via the first base station; and
the second network device comprises a second base station, and the user equipment is capable of connecting to a corresponding second core network via the second base station, wherein
the first core network is capable of synchronizing the first paging cycle to the second core network when receiving the first paging cycle reported by the user equipment.

3. The method according to claim 2, wherein the sending, by the user equipment, a paging cycle change instruction comprises:
receiving, by the user equipment, the first instruction sent by the first network device, wherein the user equipment is not handed over to the second network standard; and
sending, by the user equipment, a first cancel instruction to the first core network, wherein the first cancel instruction is used for canceling the first paging cycle synchronized by the first core network to the second core network, to cause the paging cycle of the user equipment to be the same as the paging cycle of the second network device.

4. The method according to claim 3, wherein the first network standard is a 4G network, and the sending a first cancel instruction to the first core network comprises:
sending a tracking area update request to a 4G core network, wherein the tracking area update request comprises the first cancel instruction.

5. The method according to claim 2, wherein the sending, by the user equipment, a paging cycle change instruction comprises:
receiving, by the user equipment, the first instruction sent by the first network device; and
sending, by the user equipment, a second cancel instruction to the second core network during the handover to the second network standard, wherein the second cancel instruction is used for canceling the first paging cycle synchronized by the first core network to the second core network, to cause the paging cycle of the user equipment to be the same as the paging cycle of the second network device.

6. The method according to claim 5, wherein the second network standard is a 5G network or a 5.5G network, and the sending a second cancel instruction to the second core network comprises:
sending a first registration request to a 5G core network or a 5.5G core network, wherein the first registration request comprises the second cancel instruction used for canceling the first paging cycle.

7. The method according to claim 2, wherein the sending, by the user equipment, a paging cycle change instruction comprises:
receiving, by the user equipment, the first instruction sent by the first network device; and
sending, by the user equipment, a paging cycle report instruction to the second core network during the handover to the second network standard, wherein the paging cycle report instruction is used for reporting the first paging cycle to the second core network.

8. The method according to claim 7, wherein the second network standard is a 5G network or a 5.5G network, and the sending a paging cycle report instruction to the second core network comprises:
sending a second registration request to a 5G core network or a 5.5G core network, wherein the second registration request comprises the paging cycle report instruction used for reporting the first paging cycle.

9. The method according to any one of claims 1 to 8, wherein the first instruction comprises a handover and reconfiguration instruction or a redirection instruction, wherein the handover and reconfiguration instruction indicates the user equipment in a connected state to be handed over to the second network standard, and the redirection instruction indicates the user equipment in a connected state to be redirected to the second network standard after an RRC connection is released.

10. An electronic device, comprising: one or more processors; and one or more memories, wherein the one or more memories store one or more programs, and when the one or more programs are executed by the one or more processors, the electronic device is caused to perform the communication method according to any one of claims 1 to 9.

11. A computer-readable medium, wherein the readable medium stores instructions, and when the instructions are executed on a computer, the computer is caused to perform the communication method according to any one of claims 1 to 9.
